# EUROPEAN PATENT SPECIFICATION

(11) **EP 1 418 356 B1**
(45) Date of publication and mention of the grant of the patent: **07.03.2007**
(21) Application number: 03300186.8
(22) Date of filing: 30.10.2003
(51) Int. Cl.: F16D 3/38

(54) **Yoke-and-shaft coupling structure**
Gabelkopf- und Antriebswelle Struktur einer Gelenkverbindung
Structure d'accouplement de fourche et arbre

(30) Priority: 31.10.2002 JP 2002318436
(43) Date of publication of application: 12.05.2004
(73) Proprietor: JTEKT Corporation, Chuo-ku, Osaka-shi Osaka 542-8502 (JP)
(72) Inventor: Kinme, Shigetaka c/o Koyo Seiko Co., Ltd, Osaka 542-0081 (JP); Aota, Kenichi c/o Koyo Seiko Co., Ltd, Osaka 542-0081 (JP); Suzuki, Hirohisa c/o Koyo Seiko Co., Ltd, Osaka 542-0081 (JP)
(74) Representative: de Beaumont, Michel

(56) References cited:
- JP-A- 8 326 767
- US-A- 5 358 350
- US-A- 5 628 578
- US-A1- 2002 118 994
- US-B1- 6 270 418
- US-B1- 6 474 898

## Description

### 1. Field of the Invention

The present invention relates to a structure of a yoke and a shaft, in which a shaft is coupled to a yoke applicable to a universal joint, and more specifically to a coupling structure wherein positioning of a shaft is performed properly when inserting the shaft into a yoke so as to couple the shaft to the yoke.

### 2. Description of Related Art

Conventionally, a universal joint is used as shaft coupling means in parts of a vehicle steering apparatus where it is required to couple shafts with bend freedom, e.g., as means for coupling a pinion shaft to an intermediate shaft. In order to apply such a universal joint, an end portion of a shaft is coupled to a yoke which constitutes a part of the universal joint.

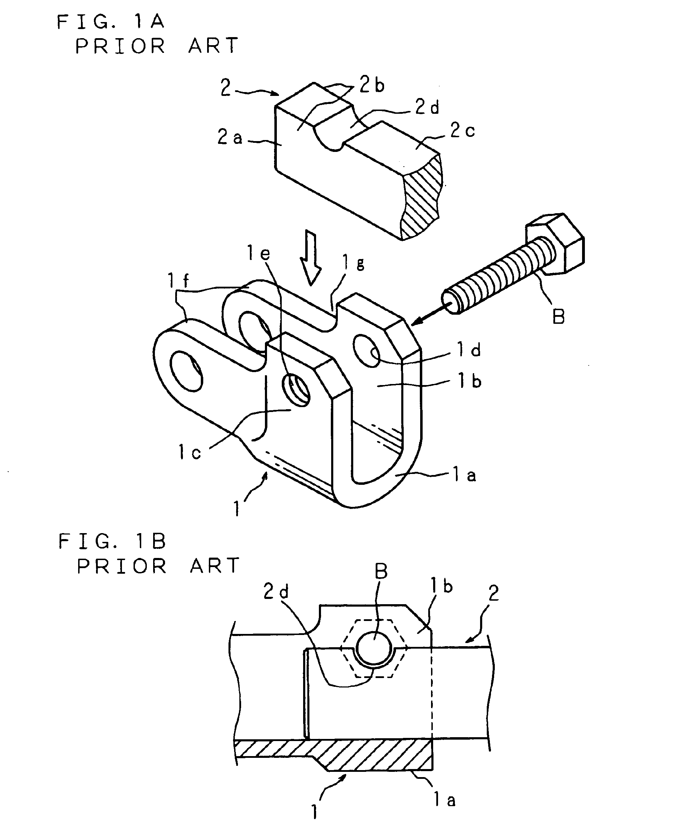

FIG. 1A shows a conventional coupling structure of a yoke 1 and a pinion shaft 2. The yoke 1 has a fork portion 1f formed continuously with a U-shaped shaft coupling portion 1a. Two opposing wall portions 1b and 1c of the shaft coupling portion 1a are respectively provided with a through hole 1d and a screw hole 1e. The pinion shaft 2 has at an end portion thereof a bolt-width portion 2a having side faces 2b formed in parallel, and a top face 2c is provided with a semicircular depressed portion 2d formed to be used for fixing the coupling. It should be noted that the depressed portion 2d is formed at such a position that the center of the depressed portion 2d accords with that of the through hole 1d and that of the screw hole 1e when the bolt-width portion 2a of the pinion shaft 2 is arranged at a set position in the axial direction of the shaft coupling portion 1a.

The yoke 1 and the pinion shaft 2 are coupled to each other to form the coupling structure shown in FIG. 1B in which a bolt B is engaged with the depressed portion 2d of the pinion shaft 2, by inserting the pinion shaft 2 into the shaft coupling portion 1a of the yoke 1 through an opening portion 1g at the upper portion, inserting the bolt B into the through hole 1d of the yoke 1 and tightening the bolt B at the screw hole 1e.

It should be noted that whether the pinion shaft 2 has been arranged at a set position or not is judged on the basis of whether the bolt B can be inserted or not, since when the inserted pinion shaft 2 is not arranged at a set position with respect to the shaft coupling portion 1a, the positions of the depressed portion 2d and through hole 1d do not accord with each other, the through hole 1d is blocked by a side face 2b and the bolt B cannot be inserted. When the bolt B cannot be inserted, the pinion shaft 2 is moved in the axial direction in a suitable manner so as to make positions of the depressed portion 2d and through hole 1d accord with each other before inserting the bolt B again. Japanese Patent Application Laid-Open No. 2000-310232 discloses such a yoke-and-shaft coupling structure.

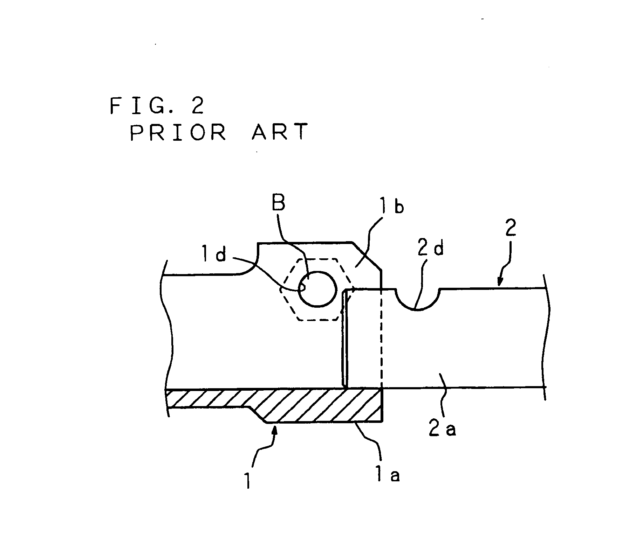

As described above, when the inserted pinion shaft 2 is not arranged at a set position, it is basically possible to prevent poor coupling of a pinion shaft 2 since the fact that the pinion shaft 2 is not arranged at a set position can be judged on the basis of the fact that the bolt B cannot be inserted. However, when only an end portion of the bolt-width portion 2a of the pinion shaft 2 is inserted into the shaft coupling portion 1a of the yoke 1 without reaching the through hole 1d as shown in FIG. 2, the bolt B can be inserted into the through hole 1d. Furthermore, since the bolt-width potion 2a is tentatively supported in the shaft coupling portion 1a even in this state, the pinion shaft 2 does not fall off immediately. As a result, there arises a problem that it is impossible to prevent all poor positioning of the pinion shaft 2 only on the basis of whether the bolt B can be inserted or not.

Moreover, when the width of the inner space of the shaft coupling portion 1a is larger than the thickness of the bolt-width portion 2a, the bolt-width portion 2a arranged inside the shaft coupling portion 1a sometimes leans around the center thereof. When the bolt-width portion 2a leans, the depressed portion 2d of the bolt-width portion 2a also leans with respect to the through hole 1d. In this state wherein the bolt B cannot be inserted even when the position of the depressed portion 2d in the axial direction accords with that of the through hole 1d, there arises another problem that an error may occur in judging whether the pinion shaft 2 is at a set position or not.

Documents US-5628578 and JP-4-08-326767 disclose yoke-and-shaft coupling structures which are considered the closest prior art to the present invention. According to the preamble of the following independent claim.

The present invention has been made with the aim of solving the above problems, and it is an object thereof to provide a yoke-and-shaft coupling structure wherein insertion of a shaft into a yoke is prohibited in any position other than a set position, so as to prevent making poor coupling.

Another object of the present invention is to provide a yoke-and-shaft coupling structure wherein the shaft is prevented from leaning and coupling can be easily performed.

In a yoke-and-shaft coupling structure according to the present invention, a shaft is coupled to the inside of a shaft coupling portion which is provided at a yoke and has a U-shaped end face. The shaft coupling portion comprises a projecting portion or a recessed portion to be used for positioning the shaft in the axial direction. The shaft is inserted into the inside of the shaft coupling portion through a U-shaped opening portion, and comprises a groove portion to which the projecting portion is to be inserted or a salient portion to be inserted into the recessed portion when the shaft is inserted into the inside of the shaft coupling portion.

In the present invention wherein a projecting portion or a recessed portion is provided at the shaft coupling portion of the yoke and a groove portion or a salient portion is provided at the shaft, the position of the shaft to be inserted into the shaft coupling portion with respect to the shaft coupling potion can be fixed by inserting the projecting portion into the groove portion or by inserting the salient portion into the recessed portion. In other words, when the shaft is inserted at an improper position significantly away from a set position with respect to the shaft coupling portion, insertion of the projecting portion into the groove portion or insertion of the salient portion into the recessed portion is prohibited, and thereby the shaft coupling portion and the shaft hit against each other and insertion of the shaft itself is prohibited. Consequently, the problem of poor coupling between the yoke and the shaft can be solved reliably with simple structure.

It should be noted that it is preferable, with a view to making insertion operation of the shaft easy, to form the groove portion to have width somewhat larger than the thickness of the projecting portion. In such a measure relation, the shaft is positioned not in a pinpoint manner but positioned in a set portion covering a given area including a set position. However, this does not cause any problem since whether the shaft is at a set position or not can be judged finally with other means, e.g., on the basis of whether the bolt can be inserted or not. Moreover, similarly to the measure relation between the groove portion and the projecting portion, it is preferable to form the recessed portion to have width somewhat larger than the thickness of the salient portion.

In another yoke-and-shaft coupling structure according to the present invention, a shaft is coupled to the inside of a shaft coupling portion which is provided at a yoke and has a U-shaped end face. A covering member for covering the shaft coupling portion is attached to the yoke, and the covering member comprises a salient tongue, which projects inwardly from the periphery of the end face of the shaft coupling portion, to be used for positioning the shaft. The shaft is inserted into the inside of the shaft coupling portion through a U-shaped opening portion, and comprises a groove portion to which the salient tongue is to be inserted when the shaft is inserted into the inside of the shaft coupling portion.

In the present invention wherein a salient tongue is provided at the covering member attached to the shaft coupling portion, the position of a shaft to be inserted can be fixed by inserting the salient tongue into the groove portion formed on the shaft. Consequently, the problem of poor coupling between the yoke and the shaft due to insertion of the shaft at an improper position can be solved without especially modifying the yoke itself. It should be noted that it is preferable to make insertion operation of the shaft easy by setting the width of the groove portion somewhat larger than the thickness of the salient tongue, similarly to the structure mentioned above.

Moreover, it is preferable to form the covering member with elastic material such as spring steel or synthetic resin, with a view to making attachment operation of the covering member to the shaft coupling portion easy and ensuring easy disconnection operation for disconnecting the yoke and the shaft which have been connected to each other.

For example, there may be such a case that the yoke and the shaft which have been connected to each other need to be disconnected owing to malfunction, adjustment or the like, and the shaft is sometimes pulled out of the yoke in the axial direction in such disconnection operation. In such a case, the salient tongue is inserted into and engaged with the groove portion and may prevent the pulling out of the shaft. However, when the salient tongue is an elastic member, the salient tongue can be elastically deformed and come off the groove portion while the shaft is being pulled out, and the shaft can be easily pulled out. Moreover, since the elastic salient tongue naturally returns to the former state thereof after the shaft is pulled out, assembling operation can be easily performed for making connection again.

In the yoke-and-shaft coupling structure according to the present invention, the covering member may further comprise a press tongue for pressing the shaft inserted into the inside of the shaft coupling portion in the shaft insertion direction.

In the present invention, if a press tongue is provided at the covering member, the shaft inserted into the shaft coupling portion is pressed in the insertion direction by the press tongue. As a result, it is possible to prevent leaning of the shaft positioned inside the shaft coupling portion with the press tongue, maintain normal orientation of the shaft and realize preferable connection operation between the shaft and the yoke.

The above and further objects and features of the invention will more fully be apparent from the following detailed description with accompanying drawings.

### BRIEF DESCRIPTION OF THE SEVERAL VIEWS OF THE DRAWINGS

FIG. 1A is a perspective view of a state where a conventional yoke and a conventional pinion shaft are coupled to each other;
FIG. 1B is a schematic sectional view illustrating a conventional coupling structure of a yoke and a pinion shaft;
FIG. 2 is a schematic sectional view showing a problem which may occur in a conventional structure;
FIG. 3 is a perspective view of a state where a yoke and a pinion shaft according to an embodiment of the present invention are coupled to each other;
FIG. 4 is a perspective view of a covering member;
FIG. 5A is a schematic plan view illustrating a coupling structure of a yoke and a pinion shaft;
FIG. 5B is a section view along the line A-A in FIG. 5A;
FIG. 6 is a schematic plan view showing a state where a pinion shaft is pulled out of a yoke;
FIG. 7A is a schematic plan view illustrating a yoke and a pinion shaft of a modified example; and
FIG. 7B is a schematic plan view illustrating a yoke and a pinion shaft of another modified example.

### DETAILED DESCRIPTION OF THE INVENTION

The following description will explain the present invention with reference to the drawings illustrating embodiments thereof.

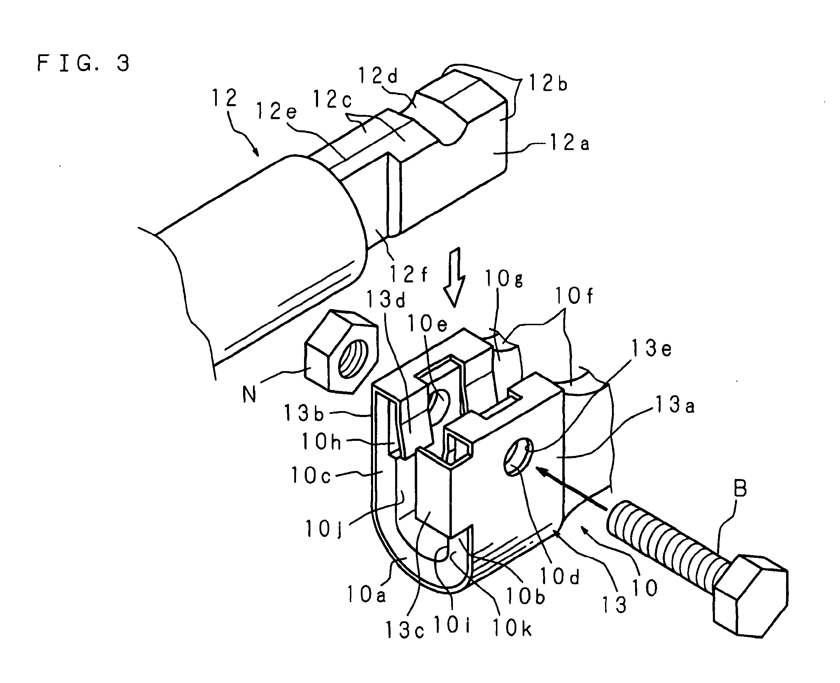

FIG. 3 shows a yoke-and-shaft coupling structure according to an embodiment of the present invention. This embodiment is applied to a case where a yoke 10 is coupled to a pinion shaft 12. The yoke 10 is provided with a shaft coupling portion 10a to which a covering member 13 is attached and which has a U-shaped end face 10k, and the yoke 10 is constructed so that the pinion shaft 12 is inserted into and coupled to the shaft coupling portion 10a.

The yoke 10 is a metal member having a required rigidity, and is formed so that a fork portion 10f is continuous with the shaft coupling portion 10a. Through holes 10d and 10e are formed respectively at wall portions 10b and 10c of the shaft coupling portion 10a opposing each other. Moreover, rectangular recessed portions 10h are formed respectively at positions of inner faces 10i and 10j of the wall portions 10b and 10c. The positions oppose press tongues 13d of the covering member 13, which will be described later.

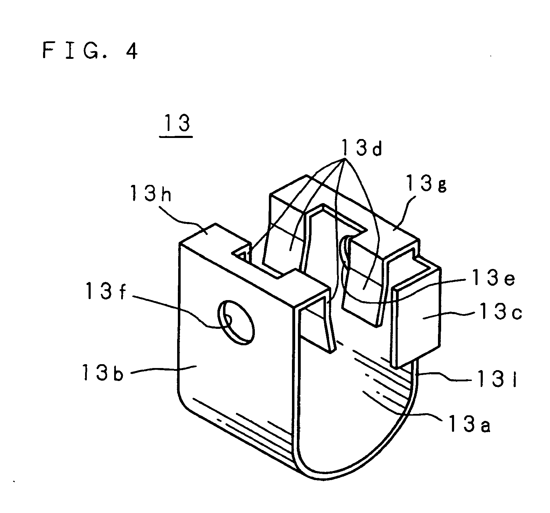

As shown in FIG. 4, the covering member 13 is formed by bending an elastic plate member such as spring steel into U-shape similar to the outer periphery of the shaft coupling portion 10a. Moreover, the covering member 13 has bolt holes 13e and 13f formed at positions of peripheral wall portions 13a and 13b, which positions correspond to the through holes 10d and 10e of the shaft coupling portion 10a when the covering member 13 is attached to the shaft coupling portion 10a.

Furthermore, horizontal portions 13g and 13h are formed continuously with the upper ends of the respective peripheral wall portions 13a and 13b, and the press tongues 13d respectively project downward to form a fork shape from end portions of the respective horizontal portions 13g and 13h. It should be noted that each press tongue 13d has an end portion crooked slightly inwardly and is long enough to make an end thereof come into contact with the pinion shaft 12 arranged inside the shaft coupling portion 10a.

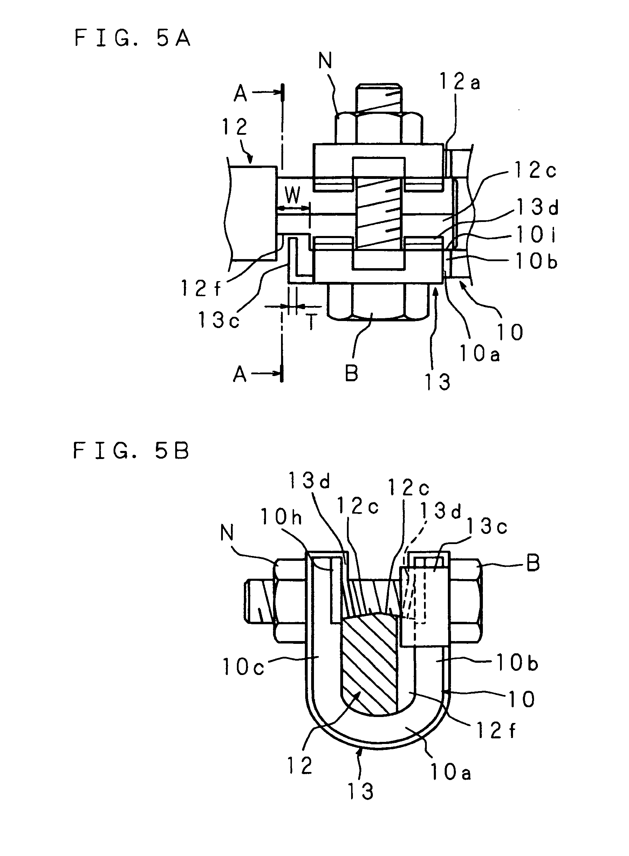

Moreover, the covering member 13 has an L-shaped salient tongue 13c which projects from an edge portion 13i of one peripheral wall portion 13a. The salient tongue 13c is formed so as to project inwardly from the periphery around the end face 10k of the shaft coupling portion 10a when the covering member 13 is attached to the shaft coupling portion 10a of the yoke 10 as shown in FIG. 3. It should be noted that the salient tongue 13c has projection measure such that an end thereof projects inwardly from the inner face 10i of one wall portion 10b of the shaft coupling potion 10a as shown in FIG. 5A.

On the other hand, the pinion shaft 12 shown in FIG. 3 is a round bar having an end portion provided with a pinion gear (not illustrated in figures) and the other end portion, which is illustrated in the figure, configured as a bolt-width portion 12a comprising side faces 12b parallel to each other. The bolt-width portion 12a has a top face 12c which is composed of inclined planes and has an axial center 12e formed as a linear apex. In other words, the bolt-width portion 12a has a top face 12c which is composed of two inclined planes being inclined with respect to a plane which is parallel to the axis of the pinion shaft 12 and is perpendicular to the side faces 12b, and these inclined planes are joined to each other at an axial center 12e of the top face 12c. Moreover, a semicircular depressed portion 12d is formed at the top face 12c so that the depressed portion 12d communicates with the through holes 10d and 10e of the shaft coupling portion 10a when the pinion shaft 12 is arranged at a set position of the shaft coupling portion 10a of the yoke 10.

Formed at one side face 12b of the bolt-width portion 12a of the pinion shaft 12 is a groove portion 12f formed in the same direction as the insertion direction of the pinion shaft 12. As shown in FIG. 5A, the groove portion 12f has a width W extending laterally in the figure, which is the axial direction, with a center at a position which opposes the salient tongue 13c when the bolt-width portion 12a is arranged at a set position of the shaft coupling portion 10a. The width W is sufficiently larger than the thickness T of the salient tongue 13c, and is six times as large as the thickness T of the salient tongue 13c in this embodiment. The groove portion 12f is deep enough to prevent an end of the salient tongue 13c from hitting against the groove portion 12f when the salient tongue 13c is positioned in the groove.

The following description will explain processes for coupling the pinion shaft 12 to the yoke 10.

First, as shown in FIG. 3, the bolt-width portion 12a is inserted in a direction indicated by the white arrow in the figure, through an opening portion 10g at the upper portion of the shaft coupling portion 10a. When the bolt-width portion 12a is inserted in a set portion of the shaft coupling portion 10a, the salient tongue 13c is inserted into the groove portion 12f, so that the bolt-width portion 12a can be smoothly inserted into the inside of the shaft coupling portion 10a while preventing the salient tongue 13c from hitting against the pinion shaft 12.

On the other hand, when the bolt-width portion 12a is inserted at a position outside the set portion of the shaft coupling portion 10a, the bottom face of the bolt-width portion 12a hits against the salient tongue 13c and insertion of the pinion shaft 12 is prevented. Even when an attempt is given to insert the pinion shaft 12 with only an end of the bolt-width portion 12a being inserted through the opening portion 10g of the shaft coupling portion 10a as shown in FIG. 2, the bolt-width portion 12a and the salient tongue 13c hit against each other and the yoke 10 and the pinion shaft 12 are prevented from coupling to each other in the positional relation shown in FIG. 2.

Moreover, since the groove portion 12f has a width W sufficiently larger than the thickness T of the salient tongue 13c, the bolt-width portion 12a can be inserted into the shaft coupling portion 10a by adjusting the bolt-width portion 12a roughly into a set position, not strictly. Consequently, even when insertion in improper positional relation is prevented as described above, an insertion operation can be easily performed without paying special attention to the insertion position.

It should be noted that, when the bolt-width portion 12a is inserted into the inside of the shaft coupling portion 10a, the side faces 12b of the bolt-width portion 12a come into contact with four press tongues 13d of the covering member 13 and press the press tongues 13d outwardly. Being pressed, the press tongues 13d which are made of elastic material are pressed into the rectangular recessed portions 10h respectively provided at the wall portions 10b and 10c, so as not to prevent insertion of the bolt-width portion 12a.

When the bolt-width portion 12a is completely inserted into the inside of the shaft coupling portion 10a, the press tongues 13d are released from contact with the side faces 12b and come off the rectangular recessed portions 10h. After the insertion, the bolt-width portion 12a is moved in the axial direction and the position thereof is adjusted so that the depressed portion 12d of the bolt-width portion 12a linearly communicates with the through holes 10d and 10e of the shaft coupling portion 10a.

It should be noted that, during such positional adjustment, the four press tongues 13d press the top face 12c of the inserted bolt-width portion 12a, and temporally hold the pinion shaft 12 as shown in FIGS. 5A and 5B. Consequently, it is possible to prevent the pinion shaft 12 from falling off the yoke 10 until the bolt B is tightened. Moreover, by pressing the top face 12c composed of inclined planes with the press tongues 13d at both sides, the orientation of the pinion shaft 12 is restricted so that the pinion shaft 12 stands erect and the axial centers of the depressed portion 12d and of the through holes 10d and 10e do not deviate from each other.

After the alignment of the semicircular depressed portion 12d and the through holes 10d and 10e through the above-described adjustment, the bolt B is inserted from one bolt hole 13e and one through hole 10d as shown in FIG. 3 and a nut N is tightened on one end of the bolt B, so as to form the coupling structure of the yoke 10 and the pinion shaft 12 as shown in FIGS. 5A and 5B.

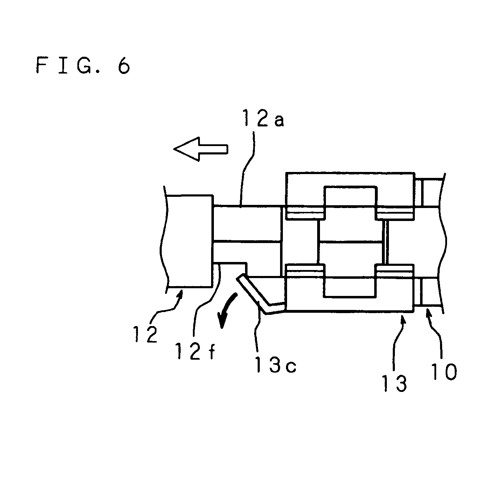

For disconnecting the yoke 10 and the pinion shaft 12 which are connected in case of malfunction or adjustment of each portion, as shown in FIG. 6, the nut N is loosened, the bolt B is pulled out, and the pinion shaft 12 is pulled in the direction indicated by the white arrow in the figure, out of the yoke 10.

During pulling out the pinion shaft 12, although the salient tongue 13c comes into contact and engages with an end of the groove portion 12f, and the salient tongue 13c is elastically deformed in the direction indicated by the black arrow in the figure and comes off the groove portion 12f when the pinion shaft 12 is further moved. When the salient tongue 13c comes off in such a manner, the pinion shaft 12 is released from restriction against movement in the axial direction and it becomes possible to pull the pinion shaft 12 out of the yoke 10. When the pinion shaft 12 is pulled out, the elastic salient tongue 13c returns to the former state thereof and is ready to be coupled again to the pinion shaft 12 having the same structure as that described above.

It should be noted that the coupling structure according to the present invention is applicable to other portions, where a universal joint is used, of a vehicle steering apparatus, and is applicable to a portion where a lower shaft of a steering wheel is coupled to a yoke, for example. Moreover, various kinds of modified examples other than the above embodiment are possible as a yoke-and-shaft coupling structure of this invention.

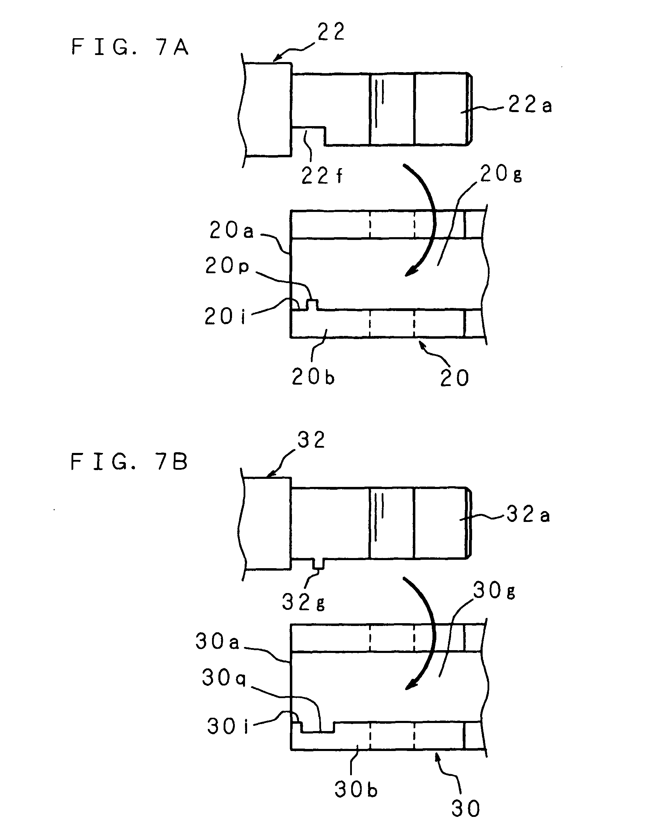

For example, in the structure shown in FIG. 7A, no covering member is attached to a yoke 20 and a projecting portion 20p for positioning a pinion shaft 22 in the axial direction is provided on one wall portion 20b of a shaft coupling portion 20a so as to project inwardly from an inner face 20i. Moreover, provided at a bolt-width portion 22a of the pinion shaft 22 is a groove portion 22f having a width sufficiently large with respect to the projecting portion 20p.

When such a pinion shaft 22 is inserted into the shaft coupling portion 20a through an opening portion 20g, the projecting portion 20p prevents insertion at an improper position and the projecting portion 20p is inserted into the groove portion 22f. As a result, the insertion of the pinion shaft 22 in a set portion can be ensured with simple structure.

Furthermore, as shown in FIG. 7B, a yoke 30 has a recessed portion 30q formed on an inner face 30i of one wall portion 30b of the shaft coupling portion 30a, and a salient portion 32g formed at a bolt-width portion 32a of a pinion shaft 32. It should be noted that the width of the recessed portion 30q is sufficiently larger than the thickness of the salient portion 32g.

When such a pinion shaft 32 is inserted into a shaft coupling portion 30a through an opening portion 30g, the salient portion 32g prevents insertion at an improper position and the salient portion 32g is inserted into the recessed portion 30q. As a result, the insertion of the pinion shaft 32 in a set portion can be ensured. It should be noted that, when the coupling of the coupling structure shown in FIGS. 7A and 7B is released, the pinion shaft 22 or 32 is taken out of the shaft coupling portion 20a or 30a through the opening portion 20g or 30g since the projecting portion 20p and the salient portion 32g cannot be elastically deformed.

Although four press tongues 13d are provided on the covering member 13 (two on each side) in the above embodiment, it is also possible to provide only two press tongues 13d at one side.

## Claims

1. A yoke-and-shaft coupling structure, wherein the shaft (12; 22, 32) is coupled to inside of a shaft coupling portion (10a; 20a, 30a) which is provided at the yoke (10; 20, 30) and has a U-shaped end face, wherein:
the shaft (12; 22, 32) is inserted into the inside of the shaft coupling portion (10a; 20a, 30a) through a U-shaped opening portion (10g; 20g, 30g), and
the shaft comprises a groove portion (12f; 22f) in which the projecting portion (13c; 20p) is to be inserted or a salient portion (32g) to be inserted into the recessed portion (30q) when the shaft (12; 22, 32) is inserted into the inside of the shaft coupling portion (10a; 20a, 30a), and **characterised in that** the shaft coupling portion (10a; 20a, 30a) is linked to a single projecting portion (13c; 20p) or comprises a single recessed portion (30q) to be used for positioning the shaft (12; 22, 32) in both directions along an axis of the shaft,

2. The yoke-and-shaft coupling structure according to claim 1, wherein said projecting portion (20p) is integral with the shaft coupling portion (20a).

3. The yoke-and-shaft coupling structure according to claim 1, wherein said projecting portion is an inwardly salient tongue (13c), that is part of a covering member (13) for covering the shaft coupling portion (10a) attached to the yoke (10).

4. The yoke-and-shaft coupling structure according to Claim 3, wherein the covering member (13) further comprises a press tongue (13d) for pressing the shaft (12) inserted into the inside of the shaft coupling portion (10a) in a shaft insertion direction.

5. The yoke-and-shaft coupling structure according to Claim 4, wherein the shaft coupling portion (10a) has, on an inner face thereof, a rectangular recessed portion (10h) which can house the press tongue (13d).

6. The yoke-and-shaft coupling structure according to Claim 4, wherein the covering member (13) comprises a plurality of press tongues (13d).

7. The yoke-and-shaft coupling structure according to Claim 4, wherein the shaft (12) has, at one end thereof, side faces (12b) parallel to each other and a top face composed of two inclined planes (12c) being inclined with respect to a plane which is parallel to an axis of the shaft (12) and is perpendicular to the side faces (12b), the inclined planes (12c) being joined to each other at an axial center (12e) of the top face, so that the shaft (12) can be engaged with the press tongue (13d).

8. The yoke-and-shaft coupling structure according to one of Claims 3 through 7, wherein the covering member (13) is made of an elastic material.

9. The yoke-and-shaft coupling structure according to one of Claims 3 through 7, wherein a width (W) of the groove portion (12f) in an axial direction is at least six times as large as a thickness (T) of the salient tongue (13c).

10. The yoke-and-shaft coupling structure according to one of Claims 3 through 7, wherein the groove portion (12f) is deep enough to prevent the groove portion (12f) and the salient tongue (13c) from hitting against each other when the salient tongue (13c) is inserted into the groove portion (12f).

## Patentansprüche

1. Gabel-und-Wellen-Kupplung, bei welcher die Welle (12; 22, 32) an das Innere eines Wellen-Kupplungsabchnittes (10a; 20a, 30a) gekuppelt ist, der an der Gabel (10; 20, 30) vorgesehen ist und eine U-förmige Stirnseite aufweist, wobei:
die Welle (12; 22, 32) in das Innere des Wellen-Kupplungsabschnittes (10a; 20a, 30a) durch einen U-förmigen Öffnungsabschnitt (10g; 20g, 30g) eingesetzt wird, und die Welle einen ausgenommenen Abschnitt (12f; 22f) aufweist, in welchen ein vorstehender Abschnitt (13c; 20p) einzusetzen ist, oder einen vorspringenden Abschnitt (32g), der in einen ausgenommenen Abschnitt (30q) einzusetzen ist, wenn die Welle (12; 22, 32) in das Innere des Wellen-Kupplungsabschnittes (10a; 20a, 30a) eingesetzt wird,
**dadurch gekennzeichnet, daß** der Wellen-Kupplungsabschnitt (10a; 20a, 30a) mit einem einzelnen vorstehenden Abschnitt (13c; 20p) verbunden ist oder einen einzelnen ausgenommenen Abschnitt (30q) aufweist, der zum Positionieren der Welle (12; 22, 32) in beiden Richtungen längs einer Achse der Welle zu verwenden ist.

2. Gabel-und-Wellen-Kupplung nach Anspruch 1, wobei der vorstehende Abschnitt (20p) integral mit dem Wellen-Kupplungsabschnitt (20a) ausgebildet ist.

3. Gabel-und-Wellen-Kupplung nach Anspruch 1, wobei der vorstehende Abschnitt eine nach innen gerichtete vorspringende Zunge (13c) ist, die Teil eines Umhüllungsteils (13) zum Umhüllen des Wellen-Kupplungsabschnittes (10a) ist und an der Gabel (10) befestigt ist.

4. Gabel-und-Wellen-Kupplung nach Anspruch 3, wobei das Umhüllungsteil (13) weiterhin eine Druckzunge (13d) aufweist, mit welcher die in das Innere des Wellen-Kupplungs-Abschnittes (10a) eingesetzte Welle (12) in einer Wellen-Einsetzrichtung zu drücken ist.

5. Gabel-und-Wellen-Kupplung nach Anspruch 4, wobei der Wellen-Kupplungsabschnitt (10a) an einer Innenseite einen rechtwinkligen, ausgenommenen Abschnitt (10h) aufweist, welcher die Druckzunge (13d) aufnehmen kann.

6. Gabel-und-Wellen-Kupplung nach Anspruch 4, wobei das Umhüllungsteil (13) mehrere Druckzungen (13d) aufweist.

7. Gabel-und-Wellen-Kupplung nach Anspruch 4, wobei die Welle (12) an einem Ende parallel zueinander verlaufende Seitenflächen (12b) aufweist, und eine Oberseite, die aus zwei schräg angestellten Ebenen (12c) besteht, welche schräg zu einer Ebene verlaufen, welche parallel zu einer Achse der Welle (12) und rechtwinklig zu den Seitenflächen (12b) verläuft, wobei die schrägen Ebenen bzw Flächen (12c) an einer axialen Mitte (12e) der Oberseite miteinander verbunden sind, so daß die Welle (12) mit den Druckzunge (13d) in Eingriff gebracht werden kann.

8. Gabel-und-Wellen-Kupplung nach einem der Ansprüche 3 bis 7, wobei das Umhüllungsteil (13) aus einem elastischen Material besteht.

9. Gabel-und-Wellen-Kupplung nach einem der Ansprüche 3 bis 7, wobei eine Breite (W) des ausgenommenen Abschnittes (12f) in axialer Richtung wenigstens sechsmal so groß ist wie die Dicke (T) der vorspringenden Zunge (13c).

10. Gabel-und-Wellen-Kupplung nach einem der Ansprüche 3 bis 7, wobei der ausgenommene Abschnitt (12f) tief genug ist, um zu verhindern, daß der ausgenommene Abschnitt (12f) und die vorspringende Zunge (13c) gegeneinanderstoßen, wenn die vorspringende Zunge (13c) in den ausgenommenen Abschnitt (12f) eingesetzt wird.

## Revendications

1. Structure d'accouplement de fourche et arbre, dans laquelle l'arbre (12 ; 22, 32) est accouplé à l'intérieur d'une partie d'accouplement d'arbre (10a ; 20a, 30a) qui est prévue dans la fourche (10 ; 20, 30) et comporte une face d'extrémité en forme de U, dans laquelle :
l'arbre (12 ; 22, 32) est inséré à l'intérieur de la partie d'accouplement d'arbre (10a; 20a, 30a) à travers une partie d'ouverture en forme de U (10g ; 20g, 30g), et
l'arbre comprend une partie de rainure (12f ; 22f) dans laquelle une partie en saillie (13c ; 20p) doit être insérée ou comprend une partie saillante (32g) qui doit être insérée dans une partie en retrait (30q) lorsque l'arbre (12 ; 22, 32) est inséré à l'intérieur de la partie d'accouplement d'arbre (10a ; 20a, 30a), et **caractérisée en ce que**
la partie d'accouplement d'arbre (10a ; 20a, 30a) est reliée à une unique partie en saillie (13c ; 20p) ou comprend une unique partie en retrait (30q) destinée à être utilisée pour le positionnement de l'arbre (12 ; 22, 32) dans les deux directions suivant un axe de l'arbre.

2. Structure d'accouplement de fourche et arbre selon la revendication 1, dans laquelle la partie en saillie (20p) est formée d'une seule pièce avec la partie d'accouplement d'arbre (20a).

3. Structure d'accouplement de fourche et arbre selon la revendication 1, dans laquelle la partie en saillie est une languette saillante vers l'intérieur (13c), qui fait partie d'un élément de couverture (13) destiné à couvrir la partie d'accouplement d'arbre (10a) fixée à la fourche (10).

4. Structure d'accouplement de fourche et arbre selon la revendication 3, dans laquelle l'élément de couverture (13) comprend en outre une languette d'appui (13d) pour presser sur l'arbre (12) inséré à l'intérieur de la partie d'accouplement d'arbre (10a) dans une direction d'insertion d'arbre.

5. Structure d'accouplement de fourche et arbre selon la revendication 4, dans laquelle la partie d'accouplement d'arbre (10a) comporte, sur une de ses faces internes, une partie rectangulaire en retrait (10h) qui peut recevoir la languette d'appui (13d).

6. Structure d'accouplement de fourche et arbre selon la revendication 4, dans laquelle l'élément de couverture (13) comprend une pluralité de languettes d'appui (13d).

7. Structure d'accouplement de fourche et arbre selon la revendication 4, dans laquelle l'arbre (12) comporte, à une de ses extrémités, des faces latérales (12b) parallèles entre elles et une face supérieure composée de deux plans inclinés (12c) qui sont inclinés par rapport à un plan qui est parallèle à un axe de l'arbre (12) et est perpendiculaire aux faces latérales (12b), les plans inclinés (12c) étant reliés entre eux au niveau d'un centre axial (12e) de la face supérieure, de sorte que l'arbre (12) peut être mis en contact avec la languette d'appui (13d).

8. Structure d'accouplement de fourche et arbre selon l'une des revendications 3 à 7, dans laquelle l'élément de couverture (13) est en un matériau élastique.

9. Structure d'accouplement de fourche et arbre selon l'une des revendications 3 à 7, dans laquelle la largeur (W) de la partie de rainure (12f) dans une direction axiale est au moins six fois plus grande que l'épaisseur (T) de la languette saillante (13c).

10. Structure d'accouplement de fourche et arbre selon l'une des revendications 3 à 7, dans laquelle la partie de rainure (12f) est assez profonde pour empêcher la partie de rainure (12f) et la languette saillante (13c) de buter l'une contre l'autre lorsque la languette saillante (13c) est insérée dans la partie de rainure (12f).
